(19) Europäisches Patentamt
European Patent Office
Office européen des brevets

(11) Veröffentlichungsnummer: **0 074 079**
**A1**

# (12) EUROPÄISCHE PATENTANMELDUNG

(21) Anmeldenummer: 82108039.7

(22) Anmeldetag: 01.09.82

(51) Int. Cl.³: C 07 F 9/65
A 01 N 57/16, A 01 N 57/24

(30) Priorität: 05.09.81 DE 3135236

(43) Veröffentlichungstag der Anmeldung: 16.03.83 Patentblatt 83/11

(84) Benannte Vertragsstaaten: CH DE FR GB IT LI NL

(71) Anmelder: HOECHST AKTIENGESELLSCHAFT
Postfach 80 03 20
D-6230 Frankfurt/Main 80(DE)

(72) Erfinder: Kübel, Börries, Dr.
Kuckucksweg 14
D-6233 Kelkheim (Taunus)(DE)

(72) Erfinder: Knauf, Werner, Dr.
Im Kirschgarten 24
D-6239 Eppstein/Taunus(DE)

(72) Erfinder: Sachse, Burkhard, Dr.
An der Ziegelei 30
D-6233 Kelkheim (Taunus)(DE)

(72) Erfinder: Waltersdorfer, Anna, Dr.
Rauenthaler Weg 28
D-6000 Frankfurt am Main 71(DE)

## (54) Substituierte 1.2.4-Oxadiazol-3-yl-vinyl-(thio)phosphate und -phosphonate, Verfahren zu ihrer Herstellung und ihre Verwendung als insektizide und akarizide Mittel.

(57) Gegenstand der Erfindung sind Verbindungen der Formel I,

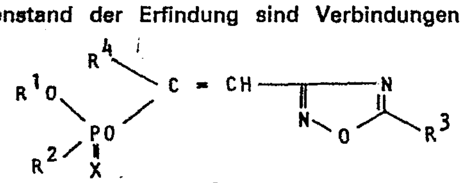

(1)

worin $R^1$ = niederes Alkyl, $R^2$ = niedere s Alkyl, niederes Alkoxy oder niederes Alkylthio, $R^3$ = Wasserstoff, gegebenenfalls substituiertes Alkyl, $C_3$-$C_4$-Cycloalkyl oder gegebenenfalls substituiertes Phenyl, $R^4$ = Wasserstoff oder $CH_3$ sowie X = Sauerstoff oder Schwefel bedeuten, Verfahren zu deren Herstellung und ihre Verwendung als insektizide, akarizide und fungizide Mittel.

EP 0 074 079 A1

Substituierte 1.2.4-Oxadiazol-3-yl-vinyl-(thio)phosphate und -phosphonate, Verfahren zu ihrer Herstellung und ihre Verwendung als insektizide und akarizide Mittel

Gegenstand der Erfindung sind neue (Thio)Phosphate und Phosphonate der allgemeinen Formel

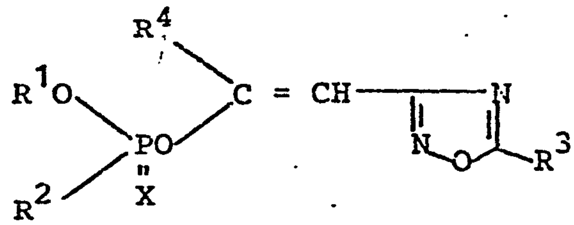

(I)

worin $R^1$ $C_1$-$C_4$-Alkyl;
$R^2$ = $C_1$-$C_4$-Alkyl, $C_1$-$C_4$-Alkoxy oder $C_1$-$C_4$-Alkylthio;
$R^3$ = Wasserstoff, $C_1$-$C_6$-Alkyl, das durch Halogen, $C_1$-$C_3$-Alkoxy, $C_1$-$C_3$-Alkylthio, Di-($C_1$-$C_3$-alkyl)amino oder Phenyl substituiert sein kann; $C_3$-$C_6$-Cycloalkyl oder gegebenenfalls durch Halogen, $C_1$-$C_3$-Alkyl, $C_1$-$C_3$-Alkoxy oder Nitro substituiertes Phenyl;
$R^4$ = Wasserstoff oder $CH_3$ sowie
X = Sauerstoff oder Schwefel bedeuten.

Die Verbindungen der Formel I können als E-Isomere der Formel

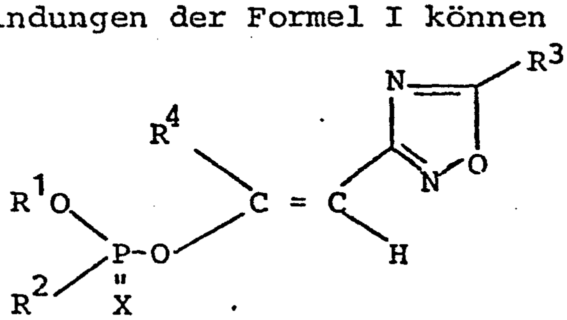

(Ia)

oder als Z-Isomere der Formel

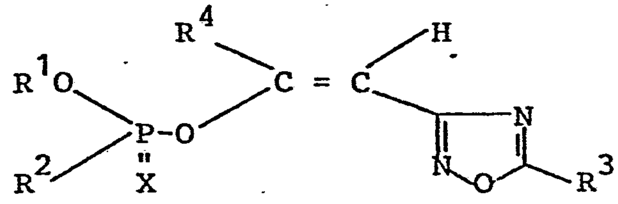

(Ib)

vorliegen. Die Erfindung betrifft sowohl die einzelnen Isomere als auch deren Mischungen.

Gegenstand der Erfindung ist weiterhin ein Verfahren zur Herstellung von Verbindungen der Formel I, dadurch gekennzeichnet, daß man Verbindungen der Formel II,

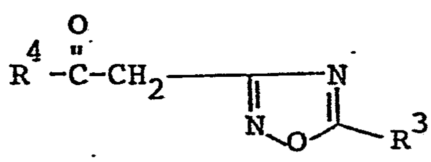

(II)

worin $R^3$ und $R^4$ die obengenannte Bedeutung besitzen, oder deren Alkalienolate mit Verbindungen der Formel

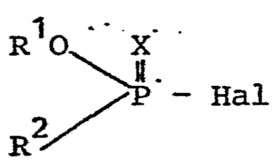

(III),

worin Hal Chlor oder Brom, vorzugsweise Chlor, bedeutet und $R^1$, $R^2$ die obengenannte Bedeutung zukommt, umsetzt.

Die Umsetzung erfolgt in geeigneten Lösungs- oder Verdünnungsmitteln, z.B. in Aceton, Methylethylketon, THF, Glykoldimethylether, Methylenchlorid, Dichlorethan, Toluol, Acetonitril oder DMF. Außerdem erfordert die Umsetzung der freien Verbindungen II mit III die Anwesenheit eines geeigneten Säureakzeptors in mindestens stöchiometrischer Menge. Solche Säureakzeptoren können Alkalicarbonate, Alkalihydroxide, tert. Amine wie z.B. Triethylamin, Amidine wie z.B. Diazabicycloundecen, Alkalialkoholate, insbesondere Kalium-tert.-butylat oder auch Natriumhydrid sein, wobei die beiden zuletzt genannten Basen bevorzugt

sind. Die Umsetzung kann außerdem durch die Anwesenheit von 0.5 bis 5 Mol-% eines Acylierungskatalysators, z.B. 4-Dimethylaminopyridin, begünstigt werden. Die Reaktionstemperatur liegt im allgemeinen bei Raumtemperatur, jedoch kann man auch bis auf ca. 80°C erhitzen; die Reaktionszeit richtet sich nach der Reaktivität von III und beträgt ca. 1 bis 20 Stunden. Die Verbindungen II und III werden in etwa äquimolaren Mengen eingesetzt.

Die Aufarbeitung erfolgt in üblicher Weise durch Verdünnen mit Wasser, Extraktion des Produktes mit einem nicht wassermischbaren Lösungsmittel, Trocknen der vereinigten Extrakte und Eindampfen.

Die Verbindungen der Formel I fallen als Öle an, die häufig für den angestrebten Verwendungszweck genügend rein sind. Wenn nötig oder erwünscht, kann man sie durch Andestillieren, d.h. Entfernen flüchtiger Bestandteile im Vakuum, oder durch Chromatographie weiter reinigen. Im Zuge einer chromatographischen Reinigung kann auch ein gegebenenfalls vorliegendes Gemisch aus den Stereoisomeren der Formeln I a und I b in die einzelnen Isomere getrennt werden. Zumeist deuten die $^1$H-NMR-Spektren der Verbindungen I auf ein überwiegendes bis ausschließendes Vorliegen des Z-Isomers I b hin.

Die Ausgangsstoffe der Formel II sind nach der Patentanmeldung P 31 35 237.5 erhältlich.

Verbindungen der Formel III sind bekannt.

Die erfindungsgemäßen Verbindungen der Formel I haben eine ausgezeichnete Wirkung gegen saugende und beißende Insekten sowie gegen Arten aus der Ordnung

Acarina. Bei Anwendung gegen pflanzenschädigende Insekten und Milben zeichnen sie sich außer durch Kontakt- und Fraßgiftwirkung auch durch gute Pflanzenverträglichkeit und durch systemische Eigenschaften aus. Daneben sind sie auch gegen Vorratsschädlinge sowie gegen Arten aus der Gruppe der Hygieneschädlinge wirksam.

So können verschiedene Spinnmilbenarten, wie die Obstbaumspinnmilbe (Panonychus ulmi), die Citrusspinnmilbe (Panonychus citri) und die Bohnenspinnmilbe (Tetranychus urticae) gut bekämpft werden.

Viele schädliche Insekten mit saugenden und beißenden Mundwerkzeugen lassen sich mit den erfindungsgemäßen Verbindungen gleichfalls vernichten.

Genannt seien Käfer, wie der Mexikanische Bohnenkäfer (Epilachna varivestis), Kartoffelkäfer (Leptinotarsa decemlineata), Erdfloh-Käfer (Phyllotreta spp.), Erdbeerstengelstecher (Coenorrhinus germanicus), Erdbeerblütenstecher (Anthonomus rubi), Baumwollkapselkäfer (Anthonomus grandis), Drahtwürmer (Agriotes spec.),

Schmetterlinge und deren Larven, wie der ägyptische und der altweltliche Baumwollkapselwurm (Earias insulana bzw. Heliothis armigera), Tabakknospenwurm (Heliothis virescens), Wickler, insbesondere Apfelwickler (Carpocapsa pomonella), Eichenwickler (Tortrix viridana), Fruchtschalenwickler (Adoxophyes reticulana), Knospenwickler (Hedya nubifernana), Traubenwickler (Eupoecilia ambiguella), Maiszünsler (Ostrinia nubilalis), Erdraupen (Agrotis spec.), Frostspanner (Operophthera brumata), Nonne (Lymantria monacha),

Außerdem Fliegen, wie die Rübenfliege (Pegomya betae), Mittelmeerfruchtfliege (Ceratitis capitata) und Schaben wie die Deutsche Schabe (Blatta germanica) und die orientalische Schabe (Blatta orientalis) sowie Blattläuse wie die Schwarze Bohnenlaus (Doralis fabae), Grüne Pfirsichblattlaus (Myzus persicae) und Baumwollblattlaus (Aphis gossypii) und Wanzen, z.B. Baumwollwanzen (Oncopeltus fasciatus und Dysdercus spp.). Sie sind gegen alle oder einzelne Entwicklungsstadien normal sensibler und resistenter Arten wirksam.

Daneben zeichnen sich einige der erfindungsgemäßen Verbindungen auch durch eine gute Wirkung gegen phythopathogene Pilze aus. Zu nennen sind Plasmopara viticola, Erysiphe graminis, Piricularia oryzae, Puccinia tritici, Rhizoctonia solani und Pythium ultimum.

Gegenstand der Erfindung sind daher auch insektizide und akarizide Mittel, gekennzeichnet durch ihren Gehalt an Verbindungen der Formel I neben üblichen Formulierungshilfsmitteln und Inertstoffen, sowie die Verwendung der Verbindungen der Formel I als Mittel zur Bekämpfung von Insekten und Tieren der Ordnung Akarina.

Die erfindungsgemäßen Mittel enthalten die Wirkstoffe der Formel I im allgemeinen zu 1 bis 90 Gew.-%. Sie können als Spritzpulver, emulgierbare Konzentrate, versprühbare Lösungen, Stäubemittel oder Granulate in den üblichen Zubereitungen angewendet werden.

Spritzpulver sind in Wasser gleichmäßig dispergierbare Präparate, die neben dem Wirkstoff außer einem Verdünnungs- oder Inertstoff noch Netzmittel, z.B. polyoxethylierte Alkylphenole, polyoxethylierte Fettalkohole, Alkyl- oder Alkylphenyl-sulfonate und Dispergiermittel, z.B. ligninsulfonsaures Natrium, 2,2'-dinaphthylmethan-6,6'-disulfonsaures Natrium, dibutylnaphthalinsulfonsaures Natrium oder auch oleylmethyltaurinsaures Natrium enthalten.

Emulgierbare Konzentrate werden durch Auflösen des Wirkstoffes in einem organischen Lösungsmittel, z.B. Butanol, Cyclohexanon, Dimethylformamid, Xylol oder auch höhersiedenden Aromaten oder Kohlenwasserstoffen unter Zusatz von einem oder mehreren Emulgatoren hergestellt. Als Emulgatoren können beispielsweise verwandt werden:

Alkylarylsulfonsaure Calziumsalze wie Ca-dodecylbenzolsulfonat, oder nichtionische Emulgatoren wie Fettsäurepolyglykolester, Alkylarylpolyglykolether, Fettalkoholpolyglykolether, Propylenoxid-Ethylenoxid-Kondensationsprodukte, Fettalkohol-Propylenoxid-Ethylenoxid-Kondensationsprodukte, Alkylpolyether, Sorbitanfettsäureester, Polyoxethylen-sorbitanfettsäureester oder Polyoxethylensorbitester.

Stäubemittel erhält man durch Vermahlen des Wirkstoffes mit fein verteilten, festen Stoffen, z.B. Talkum, natürlichen Tonen, wie Kaolin, Bentonit, Pyrophillit oder Diatomeenerde.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen auf die Oberfläche von Trägerstoffen, wie Sand, Kaolinite, oder von granuliertem Inertmaterial. Auch können geeignete Wirkstoffe in der für die Herstellung von Düngemittelgranalien üblichen Weise - gewünschtenfalls in Mischung mit Düngemitteln - hergestellt werden.

In Spritzpulvern variiert die Wirkstoffkonzentration z.B. zwischen etwa 10 % und 80 %, der Rest besteht aus den oben angegebenen Formulierungszusätzen. Bei emulgierbaren Konzentraten kann die Wirkstoffkonzentration gleichfalls etwa 10 bis 80 % betragen. Staubförmige Formulierungen enthalten meistens

5 - 20 % an Wirkstoff, versprühbare Lösungen etwa 2 - 20 %. Bei Granulaten hängt der Wirkstoffgehalt zum Teil davon ab, ob die wirksame Verbindung flüssig oder fest vorliegt und welche Granulierhilfsmittel, Füllstoffe usw. verwendet werden.

Zur Anwendung werden die handelsüblichen Konzentrate gegebenenfalls in üblicher Weise verdünnt, z.B. bei Spritzpulvern und emulgierbaren Konzentraten mittels Wasser. Die gebrauchsfertigen Verdünnungen enthalten den Wirkstoff in Konzentrationen von 1 bis 0,0001 %, vorzugsweise von 0,2 bis 0,001 %. Staubförmige und granulierte Zubereitungen sowie versprühbare Lösungen werden vor der Anwendung nicht mehr mit weiteren inerten Stoffen verdünnt. Die erfindungsgemäßen Wirkstoffe können mit anderen Insektiziden, Akariziden und Fungiziden kombiniert werden.

Herstellungsbeispiele

1. O-Ethyl-O-/1-methyl-2-(5-methyl-1.2.4-oxadiazol-3-yl)vinyl/-ethylthionophosphonat:

Man fügt 4.2 g (30 mmol) 3-Acetonyl-5-methyl-1.2.4-oxadiazol unter Eiskühlung zu einer Lösung von 3.5 g (31 mmol) Kalium-tert.-butylat in 60 ml trockenem THF. Nach kurzem Rühren tropft man 5.2 g (30 mmol) O-Ethyl-ethylthionophosphonylchlorid zu, rührt bei Raumtemperatur über Nacht und gießt dann auf 200 ml Wasser. Dreimaliges Ausschütteln mit Methylenchlorid, trocknen der Extrakte und Eindampfen im Rotationsverdampfer liefert 8.2 g (99 %) eines braunen Öles mit $n_D^{30} = 1.5120$.

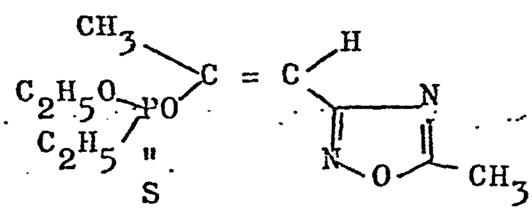

| | | |
|---|---|---|
| ber.: | N 10.1, | S 11.6 % |
| gef.: | N 9.6, | S 12,1 % |

2. O-Ethyl-O-/1-methyl-2-(5-methyl-1.2.4-oxadiazol-3-yl)vinyl7-S-propyldithiophosphat:

Man setzt 5.2g (37 mmol) 3-Acetonyl-5-methyl-1.2.4-oxadiazol analog zu Beispiel 1) mit 4.5 g (40 mmol) Kalium-tert.-butylat und 8.1 g (37 mmol) O-Ethyl-S-propyldithiophosphorylchlorid um und chromatographiert das Rohprodukt mit Methylenchlorid als Laufmittel über eine Kieselgelsäule. Die Eluatfraktionen von 300 bis 700 ml ergeben nach dem Eindampfen 3.6 g (30 %) eines gelblichen Öles mit $n_D^{30}$ = 1.5340, das nach dem $^1$H-NMR-Spektrum das reine Z-Isomer ist.

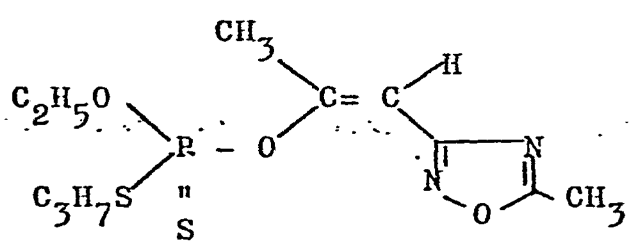

3. O.O-Diethyl-O-/1-methyl-2-(5-isopropyl-1.2.4-oxadiazol-3-yl)vinyl7-thiophosphat:

5.05 g (30 mmol) 3-Acetonyl-5-isopropyl-1.2.4-oxadiazol, 3.6 g (32 mmol) Kalium-tert.-butylat und 5.7 g (30 mmol) O.O-Diethylthiophosphorylchlorid werden unter Eiskühlung in 60 ml trockenem THF gelöst, dann einen Tag bei Raumtemperatur und

2 h bei 50°C gerührt. Aufarbeitung gemäß Beispiel 1) liefert ein Öl, das mit Benzin versetzt wird. Nach einigem Stehen saugt man vom abgeschiedenen Niederschlag ab, dampft das Filtrat im Vakuum ein und hält den Rückstand noch 3 h bei 60°C an der Ölpumpe. Zurück bleiben 5.2 g (54 %) des Produktes als hellbraunes Öl mit $n_D^{30}$= 1.5141. Nach dem $^1$H-NMR-Spektrum liegt überwiegend das Z-Isomer neben geringen Mengen des E-Isomers vor.

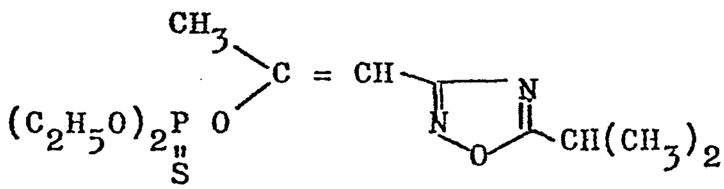

4. O-Ethyl-O-/1-methyl-2-(5-isopropyl-1.2.4-oxadiazol-3-yl)vinyl/-S-propyldithiophosphat:

Man löst 5.05 g (30 mmol) 3-Acetonyl-5-isopropyl-1-2-4-oxadiazol und 6.3 g (29 mmol) O-Ethyl-S-propyl-dithiophosphorylchlorid in 20 ml trockenem THF. Dazu tropft man bei Raumtemperatur innerhalb von 3 h eine Lösung von 3.35 g (30 mmol) Kalium-tert.-butylat in 50 ml THF, rührt noch einen Tag bei Raumtemperatur und arbeitet dann gemäß Beispiel 3) auf. Ausbeute 8.5 g (84 %) gelbes Öl mit $n_D^{30}$ = 1.5183.

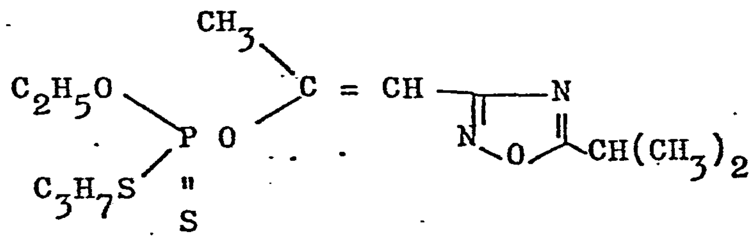

5. O-/2-(5-Benzyl-1.2.4-oxadiazol-3-yl)-1-methylvinyl7 -O-ethyl-S-propylthiolphosphat:

0.5 g (16.6 mmol) Natriumhydrid (80-proc. Emulsion im Paraffin) werden dreimal mit trockenem Petrolether gewaschen und dann mit 20 ml trockenem THF bedeckt. Unter Eiskühlung und Rühren tropft man langsam ein Gemisch aus 3.3 g (15.2 mmol) 3-Acetonyl-5-benzyl-1.2.4-oxadiazol, 3.25 g (16 mmol) O-Ethyl-S-propyl-thiol phosphorylchlorid und 30 ml trockenem THF zu. Man rührt noch 4 h bei Raumtemperatur und arbeitet dann gemäß Beispiel 1) auf. Ausbeute 4.75 g (82 %) oranges Öl mit $n_D^{24}$ = 1.5414, das nach seinem $^1$H-NMR-Spektrum das reine Z-Isomer ist.

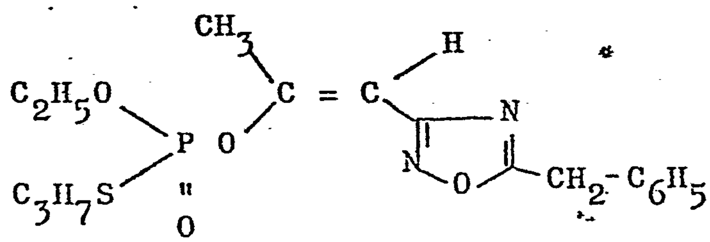

6. O-Ethyl-O-[2-(5-cyclohexyl-1.2.4-oxadiazol-3-yl)-1-methylvinyl]-S-propylthiolophosphat:

Man löst 5.2 g (25 mmol) 3-Acetonyl-5-cyclohexyl-1.2.4-oxadiazol, 4 ml Triethylamin und 0.1 g 4-Dimethylaminopyridin in 80 ml Methylenchlorid, tropft 5.2 g (26 mmol) O-Ethyl-S-propyl-thiolophosphorylchlorid zu und läßt drei Tage bei Raumtemperatur stehen. Anschließend schüttelt man mit 1 N Salzsäure und mit Bicarbonatlösung, trocknet, dampft im Rotationsverdampfer ein und chromatographiert den Rückstand mit Ethylacetat als Laufmittel über Kieselgel. Ausbeute 7.3 g = 78 % Öl mit $n_D^{23} = 1.4953$

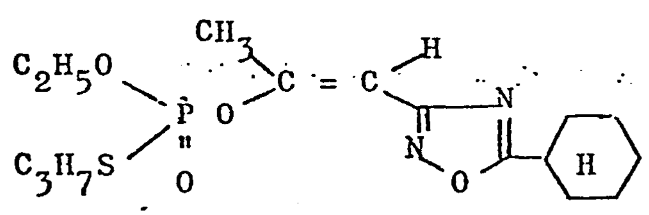

0074079

Analog zu Beispiel 1 - 6 können folgende Verbindungen I erhalten werden:

| Nr. | $R^1$ | $R^2$ | $R^3$ | $R^4$ | X | Phys. Daten |
|---|---|---|---|---|---|---|
| 7. | $C_2H_5$ | $CH_3$ | H | $CH_3$ | S | |
| 8 | $C_2H_5$ | $n-C_3H_7S$ | H | $CH_3$ | O | |
| 9 | $C_2H_5$ | $n-C_3H_7S$ | H | $CH_3$ | S | |
| 10 | $C_2H_5$ | $CH_3$ | $CH_3$ | $CH_3$ | S | |
| 11 | $C_2H_5$ | sec-$C_4H_9S$ | $CH_3$ | $CH_3$ | O | |
| 12 | $C_2H_5$ | sec-$C_4H_9S$ | $CH_3$ | $CH_3$ | S | |
| 13 | $CH_3$ | $CH_3O$ | $CH_3$ | $CH_3$ | S | |
| 14 | $C_2H_5$ | $n-C_3H_7S$ | $CH_3$ | $CH_3$ | O | $n_D^{30}$ = 1.4996 |
| 15 | $C_2H_5$ | $C_2H_5O$ | $C_2H_5$ | $CH_3$ | S | |
| 16 | $C_2H_5$ | $n-C_3H_7S$ | $C_2H_5$ | $CH_3$ | O | |
| 17 | $C_2H_5$ | $n-C_3H_7S$ | $C_2H_5$ | $CH_3$ | S | $n_D^{30}$ = 1.5262 |
| 18 | $C_2H_5$ | $C_2H_5S$ | $C_2H_5$ | $CH_3$ | O | |
| 19 | $i-C_4H_9$ | $CH_3$ | $C_2H_5$ | $CH_3$ | S | |
| 20 | $CH_3$ | $CH_3O$ | $i-C_3H_7$ | $CH_3$ | S | |
| 21 | $n-C_3H_7$ | $CH_3$ | $i-C_3H_7$ | $CH_3$ | S | |
| 22 | $C_2H_5$ | $n-C_3H_7S$ | $i-C_3H_7$ | $CH_3$ | O | $n_D^{30}$ = 1.4910 (E:Z = 1:2) |
| 23 | $C_2H_5$ | $i-C_4H_9S$ | $i-C_3H_7$ | $CH_3$ | O | |
| 24 | $CH_3$ | $CH_3O$ | $n-C_3H_7$ | $CH_3$ | S | |
| 25 | $CH_3$ | $CH_3$ | $n-C_3H_7$ | $CH_3$ | S | |
| 26 | $C_2H_5$ | $n-C_3H_7S$ | $n-C_3H_7$ | $CH_3$ | O | |

| Nr. | $R^1$ | $R^2$ | $R^3$ | $R^4$ | X | Phys. Daten |
|---|---|---|---|---|---|---|
| 27 | $C_2H_5$ | n-$C_3H_7S$ | n-$C_3H_7$ | $CH_3$ | S | |
| 28 | $CH_3$ | n-$C_3H_7$ | n-$C_4H_9$ | $CH_3$ | S | |
| 29 | $C_2H_5$ | $C_2H_5O$ | n-$C_4H_9$ | H | S | |
| 30 | $C_2H_5$ | n-$C_3H_7S$ | n-$C_4H_9$ | $CH_3$ | O | |
| 31 | $C_2H_5$ | n-$C_3H_7S$ | i-$C_4H_9$ | $CH_3$ | S | |
| 32 | n-$C_4H_9$ | $CH_3$ | i-$C_4H_9$ | H | S | |
| 33 | $C_2H_5$ | n-$C_3H_7S$ | n-$C_6H_{11}$ | H | O | |
| 34 | $C_2H_5$ | sec-$C_4H_9S$ | n-$C_6H_{11}$ | H | S | |
| 35 | $C_2H_5$ | $CH_3$ | Cyclo-$C_3H_5$ | H | S | |
| 36 | $CH_3$ | $CH_3O$ | Cyclo-$C_3H_5$ | $CH_3$ | S | |
| 37 | $C_2H_5$ | n-$C_3H_7S$ | Cyclo-$C_3H_5$ | $CH_3$ | O | $n_D^{23}$ = 1.5103 |
| 38 | $C_2H_5$ | n-$C_3H_7S$ | Cyclo-$C_3H_5$ | $CH_3$ | S | |
| 39 | $C_2H_5$ | $C_3H_7$ | Cyclo-$C_4H_7$ | $CH_3$ | S | |
| 40 | $C_2H_5$ | $C_2H_5O$ | Cyclo-$C_4H_7$ | H | S | |
| 41 | $C_2H_5$ | n-$C_3H_7S$ | Cyclo-$C_4H_7$ | $CH_3$ | O | |
| 42 | $C_2H_5$ | n-$C_3H_7S$ | Cyclo-$C_5H_9$ | $CH_3$ | O | |
| 43 | $C_2H_5$ | n-$C_3H_7S$ | Cyclo-$C_5H_9$ | $CH_3$ | S | |
| 44 | $C_2H_5$ | $CH_3$ | Cyclo-$C_5H_9$ | H | S | |
| 45 | $CH_3$ | $CH_3$ | Cyclo-$C_6H_{11}$ | H | S | |
| 46 | $C_2H_5$ | sec-$C_4H_9S$ | Cyclo-$C_6H_{11}$ | $CH_3$ | O | |
| 47 | $CH_3$ | $CH_3O$ | Cyclo-$C_6H_{11}$ | $CH_3$ | S | |
| 48 | $C_2H_5$ | $C_2H_5O$ | $CH_2OCH_3$ | $CH_3$ | S | |
| 49 | $C_2H_5$ | $C_2H_5$ | $CH_2OCH_3$ | $CH_3$ | S | |

| Nr. | $R^1$ | $R^2$ | $R^3$ | $R^4$ | X | Phys. Daten |
|---|---|---|---|---|---|---|
| 50. | $C_2H_5$ | n-$C_3H_7S$ | $CH_2OCH_3$ | $CH_3$ | O | $n_D^{30}$=1.4838 (E:Z=1:2) |
| 51 | $C_2H_5$ | n-$C_3H_7S$ | $CH_2OCH_3$ | $CH_3$ | S | $n_D^{30}$=1.5340 |
| 52 | $C_2H_5$ | n-$C_3H_7S$ | $CF_3$ | $CH_3$ | O | |
| 53 | $C_2H_5$ | n-$C_3H_7S$ | $CF_3$ | H | S | |
| 54 | $C_2H_5$ | n-$C_3H_7S$ | $CH_2C_6H_5$ | $CH_3$ | S | |
| 55. | $C_2H_5$ | $CH_3$ | $CH_2CH_2OCH_3$ | $CH_3$ | S | |
| 56 | $C_2H_5$ | n-$C_3H_7S$ | $CH_2CH_2OCH_3$ | $CH_3$ | O | |
| 57 | $C_2H_5$ | n-$C_3H_7S$ | $CH_2CH_2SC_2H_5$ | $CH_3$ | O | |
| 58. | $C_2H_5$ | sec-$C_4H_9S$ | $CH_2CH_2N(CH_3)_2$ | H | O | |
| 59 | $C_2H_5$ | n-$C_3H_7S$ | $C_6H_5$ | $CH_3$ | O | |
| 60 | $C_2H_5$ | n-$C_3H_7S$ | 4-$CH_3O$-$C_6H_4$ | H | O | |

FORMULIERUNGSBEISPIELE

Spritzpulver

6 g Wirkstoff werden mit 6 g hochdisperser Kieselsäure vorgemahlen und anschließend mit 48 g einer Mischung enthaltend 13.3 % Zellpech, 65,4 % (R)Sillithin Z (Quarz + Al-Silikat), 15,3 % hochdisperse Kieselsäure, 4,7 % Polypropylenglykol P 750 und 1,3 % Oleylmethyltaurid-Na im Mixer vermengt. Man erhält so 60 g eines 10 %igen Spritzpulvers.

Emulsionskonzentrat

2 g Wirkstoff, 16 g Cyclohexanon und 2 g Nonylphenoldekaglykolether werden miteinander vermischt. Man erhält 20 g eines 10 %igen Emulsionskonzentrates.

## Biologische Beispiele

### Beispiel I

Mit Bohnenspinnmilben (Tetranychus urticae) stark besetzte Pflanzen (Phaseolus vulg.) wurden mit der wäßrigen Suspension eines Spritzpulverkonzentrates, die 0.1 Gew.-% des Wirkstoffs aus Beispiel 1 enthielt, bis zum Stadium des beginnenden Abtropfens gespritzt und bei ca. 22°C im Gewächshaus aufgestellt.

Die akarizide Wirksamkeit wurde acht Tage nach der Behandlung ermittelt und ergab für die Verbindungen aus Beispiel 2, 4, 5, 6, 14, 17, 22, 37 und 51 100 % Mortalität.

### Beispiel II

Mit Kundebohnenblattläusen (Aphis craccivora) stark besetzte Ackerbohnen (Vicia faba) wurden mit der wäßrigen Suspension eines Spritzpulverkonzentrates, die 0.1 Gew.-% des Wirkstoffes aus Beispiel 1 enthielt, bis zum Stadium des Abtropfens gespritzt. Nach Aufstellung der Pflanzen im Gewächshaus wurde drei Tage nach der Behandlung eine 100 %ige Abtötung der Versuchstiere festgestellt. Ebenso wirksam erwiesen sich die Verbindungen gemäß Beispiel 2, 4, 5, 6, 14, 17, 22, 37, 50 und 51.

### Beispiel III

Blätter der Baumwolle (Gossypium sp.) wurden mit einer wäßrigen Emulsion der Verbindung gemäß Beispiel 14 in einer Konzentration von 0.05 Gew.-% bezogen auf Wirkstoff, besprüht (= 600 l Spritzbrühe/ha) und ebenso behandelte Raupen (10 Stück, Stadium L 3 - 4) des gemeinen Baumwollwurms (Prodenia litura) hinzugesetzt. Blätter und Raupen wurden zusammen in Beobachtungskäfige gegeben und nach 48 Stunden eine 100 % Abtötung der Versuchstiere festgestellt. Ebenso wirksam erwiesen sich die Verbindungen gemäß Beispiel 1, 2, 4, 5, 6, 17, 22, 37, 50 und 51.

Beispiel IV

Mittels einer Pipette wurden 1,0 ml der Verbindung nach Beispiel 1 als Wirkstoff in Aceton mit einer Konzentration von 0.05 Gew.-% gleichmäßig auf die Innenseiten des Deckels und des Bodens einer Petrischale aufgetragen und abtrocknen lassen. Danach wurden je Petrischale 10 Larven (L 4) der Deutschen Schabe (Blatella germanica) eingesetzt, die Schalen mit dem Deckel verschlossen und nach 72 Stunden eine 100 % Abtötung der Versuchstiere festgestellt.
Als ebenso wirksam erwiesen sich die Verbindungen gemäß Beispiel 2, 3, 4,5, 6, 14, 22, 37, 50 und 51.

Patentansprüche:

1. Verbindungen der Formel I

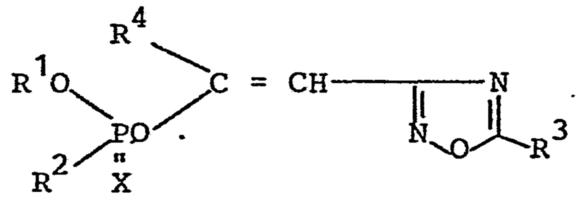

(I)

worin $R^1 = C_1-C_4$-Alkyl;
$R^2 = C_1-C_4$-Alkyl, $C_1-C_4$-Alkoxy oder $C_1-C_4$-Alkylthio;
$R^3$ = Wasserstoff, $C_1-C_6$-Alkyl, das durch Halogen, $C_1-C_3$-Alkoxy, $C_1-C_3$-Alkylthio, Di-($C_1-C_3$-alkyl)amino oder Phenyl substituiert sein kann, $C_3-C_6$-Cycloalkyl oder gegebenenfalls durch Halogen, $C_1-C_3$-Alkyl, $C_1-C_3$-Alkoxy oder Nitro substituiertes Phenyl;
$R^4$ = Wasserstoff oder $CH_3$
sowie X=Sauerstoff oder Schwefel bedeuten.

2. Verfahren zur Herstellung von Verbindungen der Formel I, dadurch gekennzeichnet, daß man Verbindungen der Formel

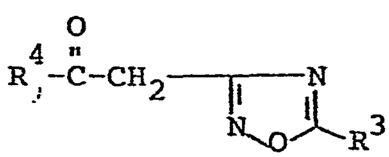

(II)

oder deren Alkalienolate mit Verbindungen der Formel

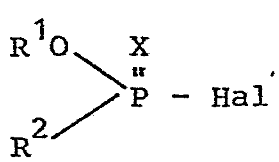

(III)

worin Hal Chlor oder Brom, vorzugsweise Chlor, bedeutet, umsetzt.

3. Insektizide und akarizide Mittel, gekennzeichnet durch einen Gehalt an Verbindungen der Formel I.

4. Verwendung von Verbindungen der Formel I zur Bekämpfung von Schadinsekten und Akariden.

5. Verfahren zur Bekämpfung von Schadinsekten und Akariden dadurch gekennzeichnet, daß man auf die von ihnen befallenen Substrate bzw. Anbauflächen eine wirksame Menge einer Verbindung der Formel I aufbringt.

Europäisches Patentamt

# EUROPÄISCHER RECHERCHENBERICHT

0074079

Nummer der Anmeldung

EP 82 10 8039

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | C 07 F 9/65<br>A 01 N 57/16<br>A 01 N 57/24 |
| Y | FR-A-2 249 893 (CIBA-GEIGY) *Insgesamt* | 1,4,5 | |
| | --- | | |
| Y | DE-A-2 430 758 (CIBA-GEIGY) *Insgesamt* | 1,4,5 | |
| | --- | | |
| P,Y | DE-A-3 010 319 (HOECHST) *Insgesamt* | 1,4,5 | |
| | ----- | | |

RECHERCHIERTE SACHGEBIETE (Int. Cl. ³)

C 07 F 9/00

Der vorliegende Recherchenbericht wurde für alle Patentansprüche erstellt.

| Recherchenort | Abschlußdatum der Recherche | Prüfer |
|---|---|---|
| DEN HAAG | 07-12-1982 | BESLIER L.M. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82